(19) 

**Europäisches Patentamt**

**European Patent Office**

**Office européen des brevets**

(11) **EP 4 601 256 A1**

(12) **EUROPEAN PATENT APPLICATION**

(43) Date of publication:
**13.08.2025 Bulletin 2025/33**

(21) Application number: **24305230.5**

(22) Date of filing: **12.02.2024**

(51) International Patent Classification (IPC):
*H04L 41/5067* (2022.01)  *H04L 41/082* (2022.01)
*H04L 43/08* (2022.01)  *H04L 41/14* (2022.01)
*H04L 41/0816* (2022.01)  *H04L 41/147* (2022.01)
*H04W 16/22* (2009.01)  *H04W 24/02* (2009.01)
*H04W 24/04* (2009.01)  *H04W 28/08* (2023.01)
*H04L 41/16* (2022.01)  *H04L 43/0829* (2022.01)
*H04L 43/0852* (2022.01)  *H04L 43/0876* (2022.01)

(52) Cooperative Patent Classification (CPC):
**H04L 41/082; H04L 41/0816; H04L 41/145;
H04L 41/147; H04L 41/5067; H04L 43/08;
H04W 16/22; H04W 24/02; H04W 24/04;
H04W 28/0268; H04W 28/0967;** H04L 41/16;
H04L 43/0829; H04L 43/0852; H04L 43/0876

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Mitsubishi Electric R&D Centre Europe B.V.
1119 NS  Schiphol Rijk Amsterdam (NL)**
Designated Contracting States:
**FR**

• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventor: **KHANFOUCI, Mourad
35708 RENNES CEDEX 7 (FR)**

(74) Representative: **Plasseraud IP
104 Rue de Richelieu
CS92104
75080 Paris Cedex 02 (FR)**

(54) **A METHOD FOR UPDATING PARAMETER VALUE OF AT LEAST ONE PARAMETER RELATED TO A QUALITY OF EXPERIENCE (QOE), DEVICE, SYSTEM AND CORRESPONDING COMPUTER PROGRAM**

(57) The disclosure pertains to a method for updating the parameter value of at least one parameter associated with the Quality of Experience (QoE) of an application in a wireless communications system. This method aims to improve the QoE of the application by adjusting relevant QoS parameters based on measured QoE and identified system features. This method is implemented in a network controller device and involves the following steps:
- Determining (10) at least one feature related to the wireless communication system that is responsible for a deviation in QoE measurements for the application.
- Obtaining (20) at least one Quality of Service (QoS) parameter linked to the deviation from the identified feature.
- Updating (30) the parameter value of the QoS parameter linked to the deviation.

[Fig. 1]

**Description**

TECHNICAL FIELD

The disclosure relates to the management of applications deployed within communications networks. More specifically, the invention relates to the determination, within a communications network, of resources required to ensure a quality of experience (QoE) of an application. The invention finds an application, for example, in the implementation of applications within a non-public communications network.

BACKGROUND ART

Control of the variations of the quality of experience (QoE) of deployed applications in wireless communications networks (more specifically of standalone non public network (SNPN)) is one of the most important aspects of the optimization of the deployment of applications in industrial networks. This control of the QoE consists of adjusting the parameters of the wireless communications network such that:

- Variations of the QoE with respect to a nominal performance regime is reduced,
- Outliers, i.e. important degradation of the QoE with respect to reference performance regime are detected and alarms are transmitted to the network controller about the parameters responsible of the QoE degradation.

Model predictive control (MPC) is one possible approach for ensuring this QoE optimization and control. MPC works in dynamic environments, utilizing predictive models to anticipate future states. This forward-looking capability is deemed to enable proactive measures to address potential issues before they impact QoE. MPC's strength lies in its ability to handle multiple variables simultaneously, ensuring a comprehensive approach to QoE management.

Indeed, one of MPC's advantages is its adaptability to changing conditions. Network dynamics, influenced by factors like varying traffic loads (due to application flows and transaction loads), require real-time adjustments. MPC works well in this regard, providing a closed-loop control system that continuously receives feedback on the network's performance, allowing it to adapt and improve QoE over time. Usually, MPC intends to stabilize the QoE achieved by the wireless network deployment for the application around the reference nominal QoE performance that is provided by a model. This stabilization is obtained by applying control over some parameters that determines the behaviour of the deviation of the QoE, obtained from the deployment with respect to the model. For achieving this result, the first step is to find a set of parameters (features) that, when applied to wireless network, reduce variation of the QoE with respect to reference QoE. The optimization metric could be a cost function of the deviation between the reference QoE and measured QoE on a receding time window of length T, i.e. time interval of [t, t+T-1]. Typical cost function of the deviation is the squared error of the difference between the measured QoE and the reference QoE and the control parameters are found as shown below:

$$parameters = agmin\left\{\sum_t \left(QoE(t) - QoE_{ref}(t)\right)^2\right\}$$

Where $QoE(t)$ is the QoE at time t, while $QoE_{ref}(t)$ is the expected (reference) QoE at time t. However, while being globally satisfactory, MPC's most disadvantageous implementation problem lies on the (very) high dimensionality of the control problem since there is a large number of parameters that may influence the variations of the QoE deviation. This is resulting in an increased complexity for the QoE control.

Another important aspect that should be considered when designing the QoE control through MPC is to reduce the amplitude (energy) of the control (parameters) to ensure the stability of the MPC and to provide alarms for possible abnormal QoE behaviour the system.

Both problems, i.e. reducing the complexity of the state-of-the-art MPC and improvement of its stability, are related to the specific selection of the parameters that has to be done in the optimization logic. Solving these problems requires adaptations of the traditional MPC.

SUMMARY

The present disclosure aims to improve the situation. It is thus disclosed a method and system for reducing the complexity reduction of the MPC for QoE control problem and alarm dissemination. More specifically, it is proposed a method for updating parameter value of at least one parameter related to a Quality of Experience of an execution of at least one application, the at least one application comprising an Application Server exchanging data with an Application Client through a wireless communications system, the method being implemented into a network controller device of the wireless communications system.

According to the disclosure, the method comprises at least one iteration of the following steps:

- determining, from QoE measurements for the at least one application, at least one feature, related to the wireless communication system, that is responsible of a deviation between the QoE measurements for the at least one application and an Application QoE model associated with the at least one application, the Application QoE model being configured to predict the variations of the QoE for the application,
- obtaining, from the at least one feature, at least one QoS parameter that is linked to the deviation,
- updating parameter value of the at least one QoS parameter that is linked to the deviation.

This method allows continuously adjusting the QoS parameters that are responsible of the QoE as measured by an application, while allowing to substantially reduce the necessary resources that are used ot determined which of the parameters are the most responsible of the QoE deviation, and thus allowing to quickly react the necessary needs of QoS parameters adjustments.

According to a feature, the QoE measurements are obtained from the application client and/or from monitoring of the quality of experience QoE at the application server.

Thus, it is possible to gather information from various source, which helps quickly reating to changes in QoE.

According to a feature, determining the at least one feature that is responsible of a deviation between the QoE measurements and the QoE obtained from the Application QoE model associated with the at least one application comprises:

- obtaining QoE measurements for the at least one application and parameters identifiers that are generating the QoE metric related to the wireless communications system,
- calculating deviations of the QoE measurements from the QoE predicted from the Application QoE model, the model being is learned during nominal application operation in the wireless communication system and/or the model being obtained from the application management layer,
- analysing the deviation of the QoE and determining a nominal deviation region and an outlier QoE deviation region,
- determining the at least one feature involved in the nominal deviation region and in the outlier QoE deviation region.

Hence, it is possible to consider only the parameters that affects highly affect the deviation.

According to a feature, obtaining QoE measurements for the at least one application comprises measuring the satisfaction of the at least one Application Client with respect to a specific configuration of the wireless communications system.

The satisfaction of the application client may be provided by some satisfaction labels, provided by the Application client, either on request or continuously during its execution.

According to a feature, the specific configuration of the wireless communications system comprises at least one set QoS parameters associated to at least one communication session opened for the at least one application.

According to a feature, obtaining QoE measurements for the at least one application comprises measuring the satisfaction of the at least one Application Client, obtained from digital twin of the wireless communications system in which the execution of the at least one application is simulated.

According to a feature, obtaining the at least one QoS parameter that is linked to the deviation comprises:

- calculating a first contribution of each of the at least one feature for the deviation of the QoE in a nominal deviation region and an outlier QoE deviation region,
- from the first contribution of each of the at least one feature for the deviation of the QoE, determining the QoS parameters linked to the determined at least one feature of the nominal deviation and the outlier deviations of the QoE,
- determining a second contribution of each of the at least one feature in the Application QoE model predictions and obtaining the QoS parameters linked to the determined at least one feature that is having prevalence over the application QoE model predictions.

According to a feature, updating parameter value of the at least one QoS parameter that is linked to the deviation comprises:

- determining, for at least some of the at least one QoS parameter, a parameter value for update,
- applying, the update to the determined QoS parameters, the updated parameter value.

According to a feature, the method further comprises updating the Application QoE model as a function of at least some of the at least one feature.

According to a feature, the Application QoE model associates at least one satisfaction index of the at least one application to at least one QoS parameter and at least one configuration parameters of the wireless communications system.

According to a feature, the wireless communications system comprises a 5G standalone non-public network.

According to another aspect, the disclosure relates to a device for updating parameter value of at least one parameter related to a Quality of Experience of an execution of at least one application, the at least one application comprising an Application Server exchanging data with an Application Client through a wireless communications system, the device being part of a network controller device of the wireless communications network. For instance, the device comprises at least at least one module for iteratively:

- determining, from QoE measurements for the at least one application, at least one feature, related to the wireless communication system, that is responsible of a deviation between the QoE measurements for the at least one application and an Application QoE model associated with the at least one application, the Application QoE model being configured to predict the variations of the QoE for the application,
- obtaining, from the at least one feature, at least one QoS parameter that is linked to the deviation,
- updating parameter value of the at least one QoS parameter that is linked to the deviation.

According to another general aspect of at least one embodiment, there is provided a non-transitory computer readable medium containing data content generated according to any of the described method for updating parameter values or variants.

According to another general aspect of at least one embodiment, there is provided a signal comprising data representative of at least one tensor of at least one layer or sub-layer of at least one Deep Neural Network, generated according to any of the described described method for updating parameter values or variants.

According to another general aspect of at least one embodiment, there is provided a computer program product comprising instructions which, when the program is executed by a computer, cause the computer to carry out any of the described method for updating parameter values or variants.

According to another general aspect of at least one embodiment, there is provided a non-transitory program storage device, readable by a computer, tangibly embodying a program of instructions executable by the computer to perform at least one of the methods of the present disclosure in any of its embodiments.

According to another general aspect of at least one embodiment, there is provided a computer readable storage medium comprising instructions which when executed by a computer cause the computer to carry out at least one of the methods of the present disclosure in any of its embodiments.

While not explicitly described, the devices of the present disclosure can be adapted to perform the methods of the present disclosure in any of their embodiments.

While not explicitly described, the present embodiments related to the methods or to the corresponding signal, devices, and computer readable storage media can be employed in any combination or sub-combination.

BRIEF DESCRIPTION OF DRAWINGS

The disclosure will be better understood upon reading the following description, given as an example that is in no way limiting, and made in reference to the figures which show:

- Figure 1: illustrates the steps of the method according to an exemplary implementation,
- Figure 2: illustrates a system in which the disclosure is intended to be implemented,
- Figure 3: illustrates a system in which the disclosure has been implemented,
- Figure 4: illustrates an example of device designed to update parameters according to the method of the disclosure.

In these figures, references identical from one figure to another designate identical or analogous elements. For reasons of clarity, the elements shown are not to scale, unless explicitly stated otherwise. Also, unless required by the language of the description, the order of steps represented in these figures is provided only for illustration purposes and is not meant to limit the present disclosure which may be applied with the same steps executed in a different order.

DESCRIPTION OF EMBODIMENTS

The problem addressed by the disclosure is the complexity reduction and stability improvement of QoE control loop through model predictive control (MPC) strategy.

As exposed previously, the disclosure proposes to reduce the dimensionality of MPC by performing a root cause analysis to identify, for a given period, a reduced set of parameters (namely a reduced set of QoS parameters) that impacts the most the measured QoE deviation from the QoE predicted by the model. In addition, the Application QoE model is eventually updated if it is determined that the control parameters (the one that causes the deviation of the QoE) are also impacting the application model performance (i.e. the adequation between the application model and the measured QoE).

In other words, the complexity reduction is obtained by the reduction of the number of parameters that influence the QoE deviation from the reference QoE obtained from the application model. The MPC stability improvement is obtained by determining another list of parameters that are affecting the abnormal behaviour of the QoE deviation and performing corrective actions by sending alarms to the relevant entities. The determination of the reduced set of relevant control parameters for both large deviation (outliers) of the QoE and small deviations are obtained, in one embodiment, by means of features extraction techniques (e.g., AI) and feature importance evaluation for the deviation of the label with respect to the predictions.

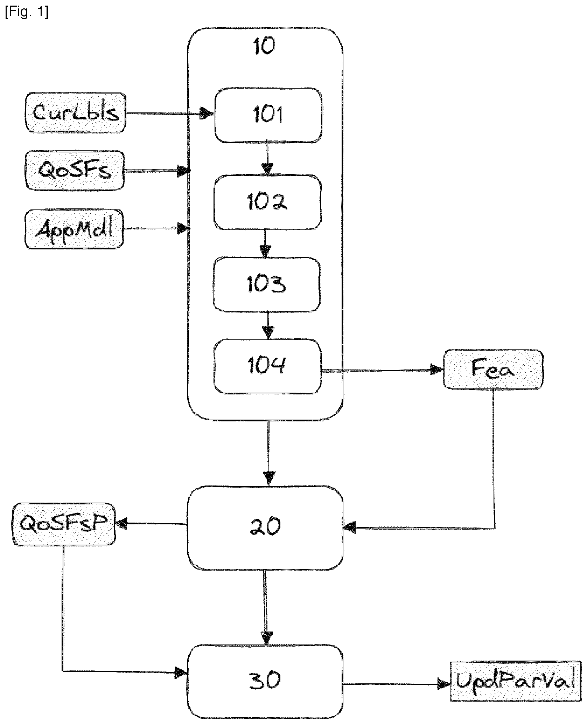

With respect to figure 1, the disclosure relates to a method for updating parameter value of one or more parameter related to a Quality of Experience QoE of an execution of an application App, the application App comprising an Application Server AS exchanging data with an Application Client AC through a wireless communications system SNPN, the method being implemented into a network controller device NCD of the wireless communications system SNPN. With respect to an embodiment, the method comprises iterations of:

- determining 10, from QoE measurements for the at least one application App, at least one feature Fea, related to the wireless communication system, that is responsible of a deviation between the QoE measurements for the at least one application App and an Application QoE model associated with the at least one application App, the Application QoE model being configured to predict the variations of the QoE for the application App,
- obtaining 20, from the at least one feature Fea, at least one QoS parameter that is linked to the deviation,
- updating 30 parameter value of the at least one QoS parameter that is linked to the deviation.

More specifically, determining 10 the features Fea that are responsible of a deviation between the QoE measurements and the Application QoE model associated with the at least one application App comprises:

- obtaining 101 QoE measurements for the at least one application App labels and parameters identifiers that are generating the QoE metric features related to the wireless communications system SNPN,
- calculating 102 deviations of the QoE measurements from the QoE predicted from the Application QoE model, the model being is learned during nominal application operation in the wireless communication system and/or the model being obtained from the application App management layer,
- analysing 103 the deviation of the QoE and determining a nominal deviation region and an outlier QoE deviation region,
- determining 104 the at least one feature Fea involved in the nominal deviation region and in the outlier QoE deviation region.

It has to be noted that the application QoE model is used to predict nominal behaviour in terms of QoE. One possible model would be the mean opinion score (MoS) (MoS= 5 (good); MoS=1 (bad) ), intermediate quality MoS values. For instance, the model provides a distribution of the MoS as a function of the QoS parameters of the network. This kind of model can be learnt periodically, learnt during optimal operating periods of the application, or given by the application as an input parameter. Other application QoE model are of course possible, with for example specific indication (labels) provided as a function of subsets of parameters: e.g., opinion scores on data rate reception, opinion scores on data decoding speed, etc., these scores being aggregated as a function of an aggregation function (or discrete function) which forms an expression of the application QoE model.

The disclosure thus proposes to reduce the dimensionality of MPC by performing a root cause analysis to find a reduced set of parameters that impacts the most the measured QoE deviation from the QoE predicted by the Application QoE model. The Application QoE model may also be updated when it is determined that all or part of the reduced set of parameters also impacts the model performance itself.

As a function of the implementation, the Application QoE model associated with the application(s) (App) comprises one or several artificial intelligence models, which were previously trained. More specifically, according to the disclosure, the prediction QoE can be achieved using Artificial Neural Network (ANN) models, which are trained to link Quality of Service (QoS) parameters (and network configuration) to predicted QoE values. The Application QoE model is designed to process at least one network Key Performance Indicators (KPIs) as input and produce expected QoE values as output. To train a neural network for QoE prediction in the communication system, the following method is employed, and comprises:

- A Data Collection phase, in which relevant network KPIs, associated with QoS, and QoE labels from the application are obtained. This may include parameters such as channel quality indicator, user throughput, data volume, modulation order, and coding, which are essential for assessing the network's capability to meet QoS requirements and influence the QoE,

- A Feature Selection phase which utilizes statistical methods such as ANOVA F-test to select the most relevant features for training the Application QoE model, allowing to practice a first limitation of the QoS features and network parameters that are first selected in the model with respect to the produced QoE labels,
- A Model Training phase to develop an Application QoE model with multiple layers to process the selected features and train it using the collected data, in which the model is designed to map the input KPIs to the corresponding QoE labels,
- An Evaluation and Validation, in which the trained Application QoE model is evaluated using appropriate validation techniques such as cross-validation to ensure its robustness and generalization capability.

More specifically, according to an embodiment, the Application QoE model is obtained (trained and tuned) offline, using a digital twin of the SNPN. The parameters of this digital twin are modified so as to produce as many as possible conditions of functioning for the SNPN, so as to obtain various possibilities of network situations while the application functions (i.e., while the application server exchanges data with the application client). The digital twin of the SNPN is a computer simulation model that replicates the assets, information, and processes of the effective SNPN, along with its operating environment and application traffic. It uses historical and real-time data to simulate the SNPN, providing benefits such as network visibility, training, and improved network operations. The digital twin is, according to the disclosure, used to study the behavior the applications which exchange data thanks to the physical network under various conditions. The digital twin works by creating a virtual representation of the network, allowing analysis, diagnosis, emulation, and control of the physical network based on data. In the context of the disclosure, the digital twin is interfaced with software applications, executing in real time to collect applications satisfaction over various working conditions.

Among others, the inventors determined that the network parameters that can be used to assess the QoE of the SNPN comprises at least one of the following:

- RAN Parameters: Network centric Radio Access Network (RAN) parameters, which involve aspects such as signal strength, interference, and handover performance,
- IP Transport Parameters: Parameters related to IP transport, including packet loss, delay, and jitter, which assess the performance of IP-based communication in the network,
- Context-Aware QoS/QoE: Consideration of context-aware QoS/QoE, which involves understanding the impact of the network's context on the application' QoE, such as location, device type,
- Throughput: The average throughput of the network, which measures the amount of data transferred per unit of time,
- End-to-End Delay: The delay experienced by data packets from the source to the destination, which directly affects real-time applications,
- Packet Loss Ratio: The ratio of lost packets to the total number of transmitted packets, assessing the reliability of the network,
- Jitter: The variation in the delay of received packets, which impacts the smoothness of real-time communication and some applications,
- Fairness Index: A measure of the fairness in resource allocation among users, which is important for ensuring equitable QoE for all users in the network,
- Channel Spectral Efficiency: The efficiency of the spectrum usage in the channel, which directly influences the network's capacity and performance,
- Throughput Efficiency: The efficiency of data transfer in the network, which is essential for maximizing the utilization of network resources,
- Signal to Interference and Noise Ratio (SINR): The ratio of the received signal power to the combined interference and noise power, which is a key indicator of the signal quality in the network.

In addition, the inventors also determined, that the QoS parameters that should be used train the Application QoE model comprise, at least one of the following parameters:

- Maximum Flow Bit Rate (Downlink / Uplink) that specifies the maximum bit rate that can be provided by the network for downlink and uplink data transmission,
- Allocation and Retention Priority (ARP) that is used to prioritize the allocation and retention of network resources for specific services or users, ensuring that higher priority services receive preferential treatment,
- Packet Delay Budget (PDB) that defines the maximum acceptable end-to-end delay for a packet, which is crucial for real-time and delay-sensitive applications,
- Level of Priority that determines the priority level of a particular service or user, influencing resource allocation and QoS treatment within the network,

- Reflective QoS Attribute (RQA) that reflects the QoS attributes associated with a QoS flow, providing essential information for QoS management and control,
- Notification Control that is used to control the notification of QoS-related events and changes within the network, ensuring effective QoS management and maintenance,
- Flow Bit Rates that specify the bit rates associated with individual QoS flows, allowing for granular control and management of data transmission within the network,
- Aggregate Bit Rates that define the combined bit rates of multiple QoS flows, providing an overview of the network's capacity and performance,
- Maximum Packet Loss Rate that indicates the maximum acceptable rate of lost packets for QoS flows, ensuring reliable and robust data transmission.

Since, as exposed herein before, that these parameters are all subject to some important variation, the ranges of possible values dramatically expand the complexity of identifying the parameters which are responsible of a mismatch between an expected QoE and an actual expressed (or measured) QoE. Thanks to the use of the proposed method, however, and more specifically thanks to the dimensionality reduction, which is made on the expression of the problem, one obtains a more accurate evaluation of the parameters that really matter while assessing or determining the root causes of the variation of the QoE.

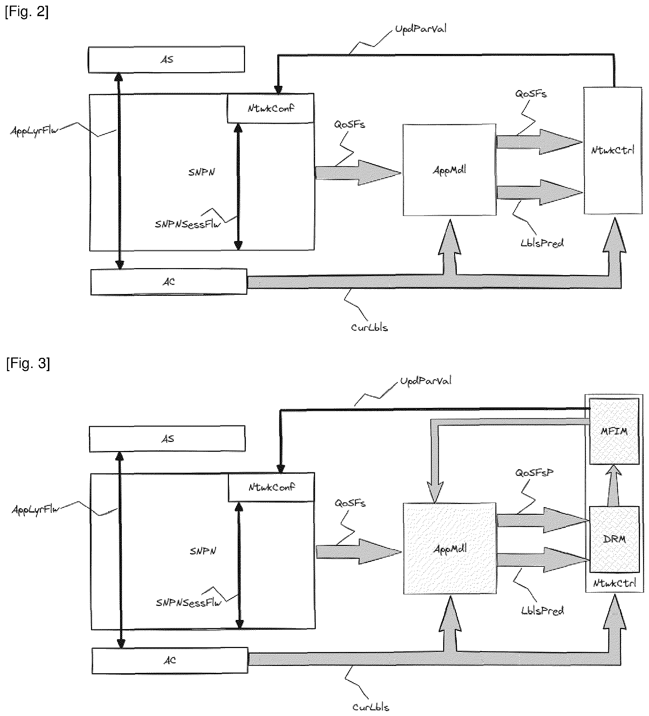

In an exemplary implementation of the method of the disclosure, as exposed in relation with figure 2 and 3, a modified "control network" node (device) is implemented. This exemplary embodiment is described with respect to an exemplary situation of a control network node, as illustrated in figure 2 which illustrates a general setup of dynamic QoE aware optimization of a SNPN deployment.

At the left-hand side of the figure 2, an application flow (AppLyrFlw) is setup between the application server (AppSrv) and the application client (AppClt) that is passing through the standalone non-public network (SNPN). The application layer flow (AppLyrFlw) is transformed into an internal SNPN session flow (SNPNSessFlw) that is used to transport the application layer packets in the SNPN domain and this session is controlled by a network configuration node (NtwkConf). The network configuration node (NtwkConf) outputs QoS features (QoSFs) that describe the session QoS parameters of the SNPN.

The closed loop network control relies on the model of the application QoE (AppMdl) that predicts, in this embodiment, the quality of experience of the application from the QoS features (QoSFs) obtained from the deployment and provides prediction of the future values of the QoS features (QoSFsP). Depending on the deployment of the application, the application QoE model may be implemented in the form of an artificial intelligence process (for example by using convolutional neural network or a U-Net++ neural network) or in the form of a linear decision tree, decision forest, or mix of several decision-making models, which are able to predict both future values of the predicted QoE (LblsPred). In other words, the model is e.g. a regression like function that provides future QoE values as a function of QoS values. More specifically, the model may be a deep learning engine that is using multiple layers of neural networks to predict the values of the predicted QoE (LblsPred) or may be based on classification machine learning techniques that is predicting classes of typical the predicted QoE (LblsPred) from the measured QoS features. In addition, the application QoE model (AppMdl) may be incorporated into an electronic device, which is connected to, or part of, the standalone non-public system (SNPN), for example as a probe, which collects data from various parts of a network of the SNPN. The application QoE model (AppMdl) may be stored in a local database that is available locally in an edge cloud system of the standalone non-public system (SNPN).

The measured (CurLbls) and the predicted QoE (LblsPred) values as well as the predicted QoS features (QoSFsP) are inputted to a network control node (NtwKCtrl) that determines from the input parameters, the actions (UpdParVal) to be applied to the network to adapt the internal SNPN parameters such that the application QoE is optimized. The network configuration node (NtwkConf) determines the parameters to be applied to the SNPN in order to setup the SNPN session (SNPNSessFlow) such that the quality of experience is optimized for the deployment of the application. The principle of model predictive control of the SNPN is thus to optimize the variations of the measured quality of experience of the client with respect to the Application QoE model (AppMdl) by applying adjustments to the radio and session parameters of the SNPN.

In other words, MPC attempts to predict the key variables that are responsible of the quality of experience dynamics of the SNPN over a moving look-ahead horizon and solves exact optimization problem based on the prediction obtained from the model. Multiple parameters can be optimized for MPC such as the time horizon for the optimization or multiple metrics that can be included to handle the measured QoE, predicted QoE and QoS features.

According to the disclosure, as illustrated in figure 3, in order to reduce the complexity (dimension) of the problem to solve, a modified "control network" device is introduced, and it comprises two modules. The general architecture remains globally the same. The first module (DRM) manages the dimensionality reduction, this reduction resulting in obtaining only a reduced set of QoS features that are responsible for label predictions variations (predicted QoE (LblsPred) produced by the Application QoE model, i.e. which label(s) is to be produced by the application QoE model according to the current measured parameters, the labels could be e.g. MoS, multi Mos of aggregation or continuous or discrete function of such). The second module MFIM implements the evaluation of the importance of the QoS features (some of them may be the ones found by the first module) for the application QoE model itself and to update the application QoE model in itself so as to improve its stability overtime.

More specifically:

- The Dimensionality reduction (DRM) node, calculates from the input variables (measured QoE, predicted QoE, measured feature QoS, predicted feature QoS), a reduced set of features that necessary impacts the difference between the measured QoE and predicted QoE.
- The Model feature importance node (MFIM) that calculates the importance of the reduced set of QoS features for the actual Application QoE model and updates the application QoE model (AppMdl) when needed.

Achieving these results, notably the dimensionality reduction, supposes that the application QoE model (AppMdl) is detained, as explained above. More specifically, on prerequisite of the implementation of this method is based on an application model relative to the QoE, this application model linking the satisfaction index of the application (i.e, an expressed QoE, made in the form of labels) to QoS features and configuration parameters of the SNPN. The Application QoE model can take several forms:

- the application model is for example obtained by training a neural network with a selected training data set (QoE labels, QoS features, network parameters),
- the application model may also be obtained by training a stacked set of neural networks with some selected training data set (QoE labels, QoS features, network parameters),
- the application model may also be obtained by training a convolutional neural network with a selected training data set (QoE labels, QoS features, network parameters),
- the application model may also be obtained by training a recurrent neural network with a selected training data set (QoE labels, QoS features, network parameters).

With the use of the application QoE model (AppMdl), these two nodes (modules) are used to find a smaller set of variables for reduced dimensionality MPC of the network, feature importance is used to find the network configuration to be applied for the control and for eventually updating the Application QoE model. These two modules (or nodes) implement an embodiment of the previously disclosed method. More specifically, in such an implementation, the following iterative method is processed:

- obtaining QoE measurements for the deployed application and/or set of applications (QoE labels), network state described by the means of QoS features and parameters that are generating the QoE metric (features) and QoS features:

    a. the measurements are obtained by measuring the satisfaction of the client application with respect to specific configuration of the SNPN; for example the Application client, provides labels representing current QoE, which can be linked to some QoS parameters associated with these QoE labels;
    b. in a complementary or alternative manner, the measurements are obtained by the runs of simulations of a digital twin of the SNPN deployment, in which some QoS parameters are changed or downgraded,

- Calculating deviation of the measured QoE from the QoE predicted from the Application QoE model. In an embodiment, the deviation calculation is done by calculating the squared difference between the measured QoE and the predicted QoE, the labels taking the form numerical values or calculating a function of the square difference. in another embodiment, the deviation is estimated by the means of a neural network that has previously learned the model of the deviation with respect to the features (QoS and network parameters),
- Analysing the calculated QoE deviation and determining nominal deviation feature region and outlier feature deviation region. According to an embodiment, the nominal feature deviation region is determined as the region the average QoE deviation. According to an embodiment, the nominal feature deviation region is determined as the average QoE deviation in a specific region fixed by the SNPN management layer. According to an embodiment, the outlier feature deviation region is a high QoE deviation that is fixed by the SNPN management layer. According to an embodiment, the outlier feature deviation region is a high QoE deviation level that is learned by the means of isolation forest. According to an embodiment, the nominal feature deviation region is determined as the average QoE deviation. The average QoE deviation is obtained from the data set that is obtained from the QoE measurements and the QoE values predicted by the QoE model, from which the outlier feature deviation regions are extracted. According to an embodiment, the nominal feature deviation region and outlier feature deviation region are based on clustering that is performed on the data set that is obtained from the QoE measurements and the QoE values predicted by the QoE model. According to a variant, the clustering is performed using deep clustering techniques. According to a variant, the clustering is performed using K-means algorithms.

- Evaluating of the features importance for the analysed deviation regions. The feature importance determines the QoS parameters that are the most responsible of nominal deviation and high (outlier) deviations of the QoE. According to an embodiment, the feature importance is calculated by the means of shapely indices of the QoS and parameters features with respect to a model of the deviation of the QoE. According to another embodiment, b. the feature importance is calculated by the means of the evaluation of the correlations between the features and QoE deviation. The importance of these features are related to the level of the correlations between the features and QoE deviation.

- Evaluating the feature importance of the Application QoE model where QoS parameters that highly impacts the Application QoE model is determined. According to an embodiment, the feature importance is calculated by the means of shapely indices of the QoS and parameters features with respect to a model of the QoE. According to an embodiment, the feature importance is calculated by the means of the evaluation of the correlations between the features and QoE data. The importance of these features are related to the level of the correlations between the features and QoE data.

- Determining the action to be performed on the determined parameters based on feature importance of the deviation and the Application QoE model. The action is consisting of update (increase/reduce the value) parameters that are showing high feature importance index with respect to the deviation of the QoE dataset, that is not impacting the Application QoE model. The following possibilities are available for the action determination:

  - the action could be the update of the parameters that are showing the most feature importance for the outliers of the QoE if these parameters are not impacting the Application QoE model. In this case, alarm is disseminated to the SNPN management layer in order to inform the deployment about future abnormal event.
  - update the Application QoE model based on feature importance if the features with high importance are also impacting the Application QoE model.

- Apply the actions to the determined parameters of the SNPN deployment and go back to first step.

The proposed method is fully automatic. It allowed managing several thousands of parameters and adjusting QoS to specific QoE requirement or objective, in real time. Such achievements are of course not obtainable by managing these parameters manually, since, as a real time process, such manual adjustments would lead to unapplicable parametrization to quick changing environments. The implementation of the methods of the disclosure reduced both the complexity of parameters adjustments and deviation from a stability point. It is emphasized that the present disclosure is not limited to the above exemplary embodiments. Variants of the above exemplary embodiments are also within the scope of the present disclosure.

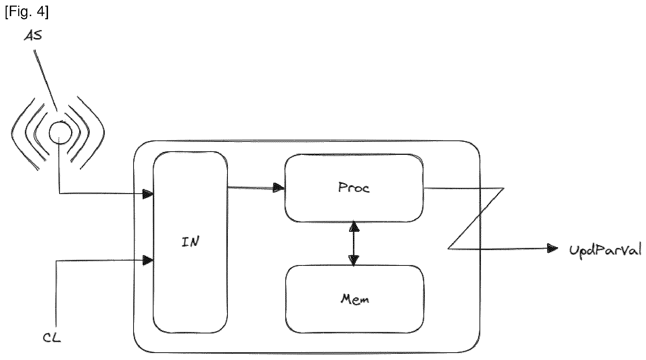

As shown in figure 4, a device DV for updating parameter value of at least one parameter related to a Quality of Experience (QoE) of an execution of at least one application (App), as presented above, can comprises an antenna system AS, for example coupled through an interface IN to a processing circuit including a processor PROC and a memory MEM. Alternatively, or in complement, or as a variant, of the antenna system AS, necessary data (e.g. measured QoE, network parameters, Qos Parameters) can also be received through a communication link CL allowing the device to determine which parameters should be updated according to the disclosure. The memory stores at least instructions of a computer program according to the present disclosure. By carrying out this type of processing, and in particular by implementing the dimensionality reduction and the important feature identification according to the method of the disclosure, the device's processor has proven to be able to both identify important features in the loss of QoE and important features for the model, in a short period of time while stabilising the application QoE model. Such an effect is obviously not possible by attempting to calculate or obtain these action sequences manually or mentally, as this would be too time-consuming and completely pointless regarding the complexity of the problem to solve.

In preferred embodiments, the computer system or device comprises one or more processors (which may belong to a same computer or to different computers) and one or more memories (magnetic hard disk, optical disk, electronic memory, or any computer readable storage medium) in which a computer program product is stored, in the form of a set of program-code instructions to be executed in order to implement all or part of the steps of the determining method. Alternatively, or in combination thereof, the computer system can comprise one or more programmable logic circuits (FPGA, PLD, etc.), and/or one or more specialized integrated circuits (ASIC), etc., adapted for implementing all or part of said steps of the determining method. In other words, the computer system comprises a set of means configured by software (specific computer program product) and/or by hardware (processor, FPGA, PLD, ASIC, etc.) to implement the steps of the determining method.

Claims

1. A method for updating parameter value of at least one parameter related to a Quality of Experience (QoE) of an execution of at least one application (App), the at least one application (App) comprising an Application Server (AS) exchanging data with an Application Client (AC) through a wireless communications system (SNPN), the method being implemented into a network controller device (NCD) of the wireless communications system (SNPN), the method comprising at least one iteration of the following steps:

   - determining (10), from QoE measurements for the at least one application (App), at least one feature (Fea), related to the wireless communication system, that is responsible of a deviation between the QoE measurements for the at least one application (App) and an Application QoE model associated with the at least one application (App), the Application QoE model being configured to predict the variations of the QoE for the application (App),
   - obtaining (20), from the at least one feature (Fea), at least one QoS parameter that is linked to the deviation,
   - updating (30) parameter value of the at least one QoS parameter that is linked to the deviation.

2. The method according to claim 1, wherein the QoE measurements are obtained from the application client (AC) and/or from monitoring of the quality of experience QoE at the application server (AS).

3. The method, according to claim 1, wherein determining (10) the at least one feature (Fea) that is responsible of a deviation between the QoE measurements and the QoE obtained from the Application QoE model associated with the at least one application (App) comprises:

   - obtaining (101) QoE measurements for the at least one application (App) (labels) and parameters identifiers that are generating the QoE metric (features) related to the wireless communications system (SNPN),
   - calculating (102) deviations of the QoE measurements from the QoE predicted from the Application QoE model, the model being is learned during nominal application operation in the wireless communication system and/or the model being obtained from the application (App) management layer,
   - analysing (103) the deviation of the QoE and determining a nominal deviation region and an outlier QoE deviation region,
   - determining (104) the at least one feature (Fea) involved in the nominal deviation region and in the outlier QoE deviation region.

4. The method, according to claim 2, wherein obtaining (101) QoE measurements for the at least one application (App) comprises measuring the satisfaction of the at least one Application Client (AC) with respect to a specific configuration of the wireless communications system (SNPN).

5. The method, according to claim 4, wherein the specific configuration of the wireless communications system comprises at least one set QoS parameters associated to at least one communication session opened for the at least one application (App).

6. The method, according to claim 2, wherein obtaining (101) QoE measurements for the at least one application (App) comprises measuring the satisfaction of the at least one Application Client (AC), obtained from digital twin of the wireless communications system (SNPN) in which the execution of the at least one application (App) is simulated.

7. The method, according to claim 1, wherein obtaining (20) the at least one QoS parameter that is linked to the deviation comprises:

   - calculating (201) a first contribution of each of the at least one feature (Fea) for the deviation of the QoE in a nominal deviation region and an outlier QoE deviation region,
   - from the first contribution of each of the at least one feature (Fea) for the deviation of the QoE, determining (202) the QoS parameters linked to the determined at least one feature of the nominal deviation and the outlier deviations of the QoE,
   - determining (203) a second contribution of each of the at least one feature (Fea) in the Application QoE model predictions and obtaining the QoS parameters linked to the determined, at least one feature (Fea) that is having prevalence over the application QoE model predictions.

8. The method, according to claim 1, wherein updating (30) parameter value of the at least one QoS parameter that is linked to the deviation comprises:

- determining, for at least some of the at least one QoS parameter, a parameter value for update;
- applying, the update to the determined QoS parameters, the updated parameter value.

9. The method, according to any of claim 1 to 8, wherein it further comprises updating the Application QoE model as a function of at least some of the at least one feature (Fea).

10. The method, according to any of claim 1 to 9, wherein the Application QoE model associates at least one satisfaction index of the at least one application to at least one QoS parameter and at least one configuration parameters of the wireless communications system (SNPN).

11. The method, according to claim 1, wherein the wireless communications system (SNPN) comprise a 5G standalone non-public network.

12. A device for updating parameter value of at least one parameter related to a Quality of Experience (QoE) of an execution of at least one application (App), the at least one application (App) comprising an Application Server (AS) exchanging data with an Application Client (AC) through a wireless communications system (SNPN), the device being part of a network controller device (NCD) of the wireless communications network (SNPN), the method comprising at least at least one module for iteratively:

   - determining, from QoE measurements for the at least one application (App), at least one feature (Fea), related to the wireless communication system, that is responsible of a deviation between the QoE measurements for the at least one application (App) and an Application QoE model associated with the at least one application (App), the Application QoE model being configured to predict the variations of the QoE for the application (App),
   - obtaining, from the at least one feature (Fea), at least one QoS parameter that is linked to the deviation,
   - updating parameter value of the at least one QoS parameter that is linked to the deviation.

13. Computer program product comprising instructions which, when executed by at least one processor, configure said at least one processor to carry out a method according to any one of claims 1 to 11.

[Fig. 1]

[Fig. 2]

[Fig. 3]

[Fig. 4]

AS

IN

CL

Proc

Mem

UpdParVal

Europäisches
Patentamt

European
Patent Office

Office européen
des brevets

# EUROPEAN SEARCH REPORT

**Application Number**

EP 24 30 5230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/023555 A1 (ERICSSON TELEFON AB L M [SE]) 1 February 2024 (2024-02-01)<br>* abstract *<br>* page 1, line 4 - page 6, line 2 *<br>* page 7, line 12 - page 33, line 30 *<br>* claims 1-30 *<br>* figures 1-13 * | 1-13 | INV.<br>H04L41/5067<br>H04L41/082<br>H04L43/08<br>H04L41/14<br>H04L41/0816<br>H04L41/147<br>H04W16/22 |
| A | WO 2023/052810 A1 (ERICSSON TELEFON AB L M [SE]) 6 April 2023 (2023-04-06)<br>* abstract *<br>* paragraph [0001] - paragraph [0034] *<br>* paragraph [0045] - paragraph [0136] *<br>* claims 1-16 *<br>* figures 1-8 * | 1-13 | H04W24/02<br>H04W24/04<br>H04W28/08<br><br>ADD.<br>H04L41/16<br>H04L43/0829<br>H04L43/0852 |
| A | WO 2024/023554 A1 (ERICSSON TELEFON AB L M [SE]) 1 February 2024 (2024-02-01)<br>* abstract *<br>* page 1, line 4 - page 4, line 17 *<br>* page 5, line 15 - page 18, line 25 *<br>* claims 1-22 *<br>* figures 1-15 * | 1-13 | H04L43/0876 |
| A | US 2021/314238 A1 (CIOFFI JOHN M [US] ET AL) 7 October 2021 (2021-10-07)<br>* abstract *<br>* paragraph [0002] - paragraph [0007] *<br>* paragraph [0035] - paragraph [0521] *<br>* claims 1-20 *<br>* figures 1-12 * | 1-13 | |

**TECHNICAL FIELDS SEARCHED (IPC)**

H04L
H04W

-/--

The present search report has been drawn up for all claims

| Place of search | Date of completion of the search | Examiner |
|---|---|---|
| Munich | 4 July 2024 | Schrembs, Gerd |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

## EUROPEAN SEARCH REPORT

**Application Number**

EP 24 30 5230

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ARSLAN AHMAD ET AL: "Supervised Learning based QoE Prediction of Video Streaming in Future Networks: A Tutorial with Comparative Study", ARXIV.ORG, CORNELL UNIVERSITY LIBRARY, 201 OLIN LIBRARY CORNELL UNIVERSITY ITHACA, NY 14853, 3 January 2022 (2022-01-03), XP091142729, DOI: 10.1109/MCOM.001.2100109 * the whole document * ----- | 1-13 | |
| | | | **TECHNICAL FIELDS SEARCHED (IPC)** |

The present search report has been drawn up for all claims

| Place of search | Date of completion of the search | Examiner |
|---|---|---|
| Munich | 4 July 2024 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5230

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2024

| Patent document cited in search report | Publication date | Patent family member(s) | Publication date |
|---|---|---|---|
| WO 2024023555 A1 | 01-02-2024 | NONE | |
| WO 2023052810 A1 | 06-04-2023 | NONE | |
| WO 2024023554 A1 | 01-02-2024 | NONE | |
| US 2021314238 A1 | 07-10-2021 | AU 2021252927 A1 | 10-11-2022 |
| | | AU 2024203486 A1 | 13-06-2024 |
| | | CA 3178285 A1 | 14-10-2021 |
| | | CN 115428368 A | 02-12-2022 |
| | | EP 4133634 A1 | 15-02-2023 |
| | | US 2021314238 A1 | 07-10-2021 |
| | | US 2022400065 A1 | 15-12-2022 |
| | | US 2024137291 A1 | 25-04-2024 |
| | | WO 2021207269 A1 | 14-10-2021 |

EPO FORM P0459

For more details about this annex : see Official Journal of the European Patent Office, No. 12/82